# EUROPEAN PATENT APPLICATION

(11) **EP 4 734 169 A1**
(43) Date of publication of application: **29.04.2026**
(21) Application number: 25209963.5
(22) Date of filing: 21.10.2025
(51) Int. Cl.: H01M 4/24, H01M 4/26, H01M 4/36, H01M 4/48, H01M 4/52, H01M 10/30

(54) **NEGATIVE ELECTRODE FOR ZINC BATTERY, ZINC BATTERY, METHOD FOR MANUFACTURING NEGATIVE ELECTRODE FOR ZINC BATTERY, AND NEGATIVE ELECTRODE MATERIAL FOR ZINC BATTERY**

(30) Priority: 22.10.2024 JP 2024185830
(71) Applicant: FDK Corporation, Tokyo 108-8212 (JP)
(72) Inventor: BANNO, Taketoshi, Tokyo, 108-8212 (JP); MURASE, Satoshi, Tokyo, 108-8212 (JP); YAMAGUCHI, Tomomichi, Tokyo, 108-8212 (JP); KAJIWARA, Takeshi, Tokyo, 108-8212 (JP); ITO, Takeshi, Tokyo, 108-8212 (JP)
(74) Representative: Tiburzi, Andrea

(57) **Abstract**

A negative electrode for a zinc battery of the present invention includes a negative electrode mixture containing zinc oxide. In an X-ray diffraction pattern of the negative electrode mixture, the ratio (I₀₀₂/I₁₀₁) of the peak intensity (I₀₀₂) of the (002) plane derived from the zinc oxide to the peak intensity (I₁₀₁) of the (101) plane derived from the zinc oxide is 0.4 or more.

## Description

### Technical Field

The present invention relates to a negative electrode for a zinc battery, a zinc battery, a method for manufacturing a negative electrode for a zinc battery, and a negative electrode material for a zinc battery.

### Background Art

As a zinc battery, a nickel-zinc battery, a zinc-air battery, a silver-zinc battery, and the like are known. For example, a nickel-zinc secondary battery, which is one type of nickel-zinc battery, is a battery in which a hydrogen storage alloy negative electrode of a nickel-metal hydride secondary battery is replaced with a negative electrode containing zinc or a zinc compound. Zinc is a material which is rich in resources, inexpensive, and has a small environmental load. Nickel-zinc secondary batteries also have advantages such as a high open circuit voltage of 1.8 V, a high theoretical energy density, and high output. Because of these characteristics, nickel-zinc secondary batteries have recently been developed as a replacement for lead batteries for energy storage and automotive applications.

Such zinc batteries are required to have improved discharge characteristics, for example, high output characteristics (discharge characteristics at high output) that can cope with an increase in load.

For such requirement, PTL 1 discloses a method for manufacturing a negative electrode for a zinc battery using a negative electrode mixture containing zinc oxide particles having an average particle diameter of 0.28 µm or less. PTL 2 discloses a method for manufacturing a negative electrode for a zinc battery using a negative electrode mixture containing zinc oxide particles having an average particle diameter of less than 0.60 µm. As described above, it has been considered to increase the specific surface area and improve the utilization rate of the active material by using zinc oxide particles with a relatively small average particle size.

### Citation List

### Patent Literature

PTL 1
   Japanese Patent Application Laid-Open No.2020-087703
PTL 2
   Japanese Patent Application Laid-Open No.2019-133769

### Summary of Invention

### Technical Problem

Batteries manufactured using the zinc oxide particles as described in PTL 1 and PTL 2 do not have sufficient discharge characteristics at high output.

In addition, for producing the negative electrode, a slurry is produced by mixing the negative electrode active material such as the zinc oxide particles, an additional component, and water, and the slurry is applied onto a current collector to produce the negative electrode. In this case, the zinc oxide particles having a small average particle diameter as described in PTL 1 and PTL 2 have a large specific surface area, and thus, a large amount of water is required and the productivity is also low.

The present invention has been made in view of the above circumstances, and an object the present invention is to provide a negative electrode for a zinc battery, a zinc battery, a method for manufacturing a negative electrode for a zinc battery, and a negative electrode material for a zinc battery, which have favorable productivity and can improve discharge characteristics of a battery.

### Solution to Problem

The present invention relates to a negative electrode material for a zinc battery, a zinc battery, a method for manufacturing a negative electrode for a zinc battery, and a negative electrode material for a zinc battery as follows.
[1] A negative electrode for a zinc battery, the negative electrode including: a negative electrode mixture containing zinc oxide, in which
   in an X-ray diffraction pattern of the negative electrode mixture, a ratio (I₀₀₂/I₁₀₁) of a peak intensity (I₀₀₂) of a (002) plane derived from the zinc oxide to a peak intensity (I₁₀₁) of a (101) plane derived from the zinc oxide is 0.4 or more.
[2] The negative electrode according to [1], in which: the zinc oxide contains a zinc oxide particle; and the zinc oxide particle has a median diameter of 3 µm or more and 20 µm or less.
[3] The negative electrode according to [2], in which the negative electrode mixture further contains a second zinc oxide particle having a median diameter of 2 µm or less.
[4] The negative electrode according to [3], in which a content of the zinc oxide particle in the negative electrode mixture with respect to a sum of an amount of the zinc oxide particle and an amount of the second zinc oxide particle in the negative electrode mixture is 50% by mass or more.
[5] The negative electrode according to any one of [1] to [4], further including: a current collector that holds the negative electrode mixture, in which the current collector is a non-porous current collector.
[6] A zinc battery including: a positive electrode, a negative electrode, and an alkaline electrolyte, in which the negative electrode is the negative electrode according to any one of [1] to [5].
[7] The zinc battery according to [6], in which the zinc battery is a nickel-zinc secondary battery.
[8] A method for manufacturing a negative electrode for a zinc battery, the method including: providing a zinc oxide particle having a ratio (I₀₀₂/I₁₀₁) of a peak intensity (I₀₀₂) of a (002) plane in an X-ray diffraction pattern to a peak intensity (I₁₀₁) of a (101) plane in the X-ray diffraction pattern is 0.5 or more; and preparing a negative electrode mixture containing the zinc oxide particle.
[9] The method according to [8], in which the zinc oxide particle has a median diameter of 3 µm or more and 20 µm or less.
[10] The method according to [9], in which in the preparing the negative electrode mixture, the negative electrode mixture contains the zinc oxide particle and a second zinc oxide particle having a median diameter of 2 µm or less.
[11] The method according to [10], in which a content of the zinc oxide particle in the negative electrode mixture with respect to a sum of an amount of the zinc oxide particle and an amount of the second zinc oxide particle in the negative electrode mixture is 50% by mass or more.
[12] A negative electrode material for a zinc battery, the negative electrode material including: a zinc oxide particle having, in an X-ray diffraction pattern, a ratio (I₀₀₂/I₁₀₁) of a peak intensity (I₀₀₂) of a (002) plane to a peak intensity (I₁₀₁) of a (101) plane of 0.5 or more.

### Advantageous Effects of Invention

The present invention can provide a negative electrode for a zinc battery, a zinc battery, a method for manufacturing a negative electrode for a zinc battery, and a negative electrode material for a zinc battery, which have favorable productivity and can improve discharge characteristics of a battery.

### Brief Description of Drawings

FIG. 1 is a perspective view illustrating a partially broken nickel-zinc secondary battery of an embodiment of the present invention;
FIG. 2 is X-ray diffraction patterns of zinc oxide powders used in Examples and Comparative Examples;
FIG. 3 is the measurement results of the particle size distribution of the zinc oxide powders used in Examples and Comparative Examples; and
FIG. 4 is the X-ray diffraction patterns of negative electrodes recovered from batteries of Examples and Comparative Examples.

### Description of Embodiments

In order to improve the productivity, the present inventors have attempted to increase the particle diameter of zinc oxide particles. In general, zinc oxide particles are manufactured by melting and vaporizing metal zinc and then oxidizing the vaporized zinc in air. Therefore, the resulting zinc oxide particles usually have a small particle diameter of 1 µm or less.

Regarding the particle diameter of such zinc oxide particles, the present inventors have found that, by firing the zinc oxide powder at a temperature of 1000°C or higher and then pulverizing the zinc oxide powder to a desired size, zinc oxide particles having a relatively large particle diameter are obtained. Furthermore, the inventors have found that the zinc oxide particles thus obtained can improve the discharge characteristics of a battery, despite their large particle diameter and small specific surface area; specifically, the inventors have found that the voltage drop of a battery during the discharge under load can be reduced and the discharge characteristics at high output can be improved.

In addition, it has been found that, unlike the zinc oxide particles obtained by a conventional method, the zinc oxide particles obtained in this way have an increased peak intensity specific to the c-axis direction in a powder X-ray diffraction pattern, have an arrangement structure with a high degree of regularity with respect to the c-axis direction, and are anisotropic. That is, it is considered that, during the process of pulverizing after firing, growth of zinc oxide crystal grains, introduction of oxygen deficiency, distortion of the crystal structure, and/or the like occur, and as a result, the intensity specific to the c-axis direction increases in the powder X-ray diffraction pattern.

Although it is not clear why the zinc oxide particles described above improve the discharge characteristics of a battery despite their small specific surface area, it is considered that the increase in anisotropy of the zinc oxide particles increases the number of crystal planes having high reactivity, resulting in an increased reaction area and enhanced reactivity.

That is, in the present invention, zinc oxide particles having a ratio (peak intensity ratio (I₀₀₂/I₁₀₁))-the ratio of the peak intensity (I₀₀₂) of the (002) plane to the peak intensity (I₁₀₁) of the (101) plane in an X-ray diffraction pattern-of 0.5 or more can be used as an electrode material of a battery, preferably a negative electrode material of a zinc battery, and more preferably a negative electrode active material of a zinc battery. In addition, in the negative electrode obtained using such a negative electrode material, a peak intensity ratio (I₀₀₂/I₁₀₁) of the zinc oxide particles or of the negative electrode mixture containing the zinc oxide particles is 0.4 or more.

Hereinafter, embodiments of the present invention will be described in detail. However, the present invention is not limited to the following embodiments and can be modified and implemented within the scope of the spirit of the present invention.

### 1. Negative electrode for zinc battery

A negative electrode for a zinc battery according to the present embodiment (hereinafter, also simply referred to as a "negative electrode") includes a negative electrode mixture. The negative electrode mixture is preferably held by a current collector. That is, the negative electrode according to the present embodiment preferably includes a current collector and a negative electrode mixture. The negative electrode may or may not be subjected to activation treatment.

### 1-1. Current collector

The current collector may be a non-porous current collector or a porous current collector. The non-porous current collector is a current collector having no holes at least in the portion that holds a negative electrode mixture, and is, for example, a non-porous foil. The porous current collector may be, for example, a mesh-shaped, sponge-shaped, fibrous, or felt-shaped metal porous body, a punched metal, or an expanded metal. The material of the current collector may be any metal material that is conductive and is stable at a reaction potential of the negative electrode. Examples of the material of the current collector include copper, copper alloys (for example, brass), and iron, with copper being preferable.

Among these, the current collector is preferably a non-porous current collector and more preferably a non-porous foil. Since the particle diameter of the zinc oxide particles is relatively large, voids are more likely to be formed between the zinc oxide particles. Therefore, in comparison with the zinc oxide particles in the related art, the filling density of the negative electrode mixture is more likely to decrease, and when the rolling strength is low, the mechanical strength is more likely to decrease or the active material is more likely to fall off. For the above issues, by using a non-porous current collector, the current collector can be uniformly rolled, so that the active material is less likely to fall off, and the filling density can be further improved.

The surface of the current collector may be plated. The metal constituting the plating film is preferably a metal having a hydrogen overvoltage higher than a metal contained in the main body of the current collector, and more preferably a metal (for example, tin or the like) having a hydrogen overpotential higher than copper.

### 1-2. Negative electrode mixture

The negative electrode mixture is held by the current collector and has, for example, a layered form. The negative electrode mixture contains zinc oxide. Zinc oxide can function as, for example, a negative electrode active material. In the X-ray diffraction pattern of the negative electrode mixture in the negative electrode, the ratio (peak intensity ratio (I₀₀₂/I₁₀₁)) of the peak intensity (I₀₀₂) of the (002) plane derived from zinc oxide to the peak intensity (I₁₀₁) of the (101) plane derived from zinc oxide is 0.4 or more.

When the peak intensity ratio (I₀₀₂/I₁₀₁) of the negative electrode mixture is 0.4 or more, the discharge characteristics of the battery can be improved while improving the productivity of the negative electrode mixture. Specifically, since zinc oxide particles having a high peak intensity specific to the c-axis are used as a raw material, the reactivity of the zinc oxide particles can be increased, and the discharge characteristics of the zinc battery can be improved. In addition, since the specific surface area of the zinc oxide particles is small, the amount of water during the production of the slurry can be reduced, and the productivity of the negative electrode mixture can be improved. On the other hand, from the viewpoints of reducing the manufacturing cost and suppressing the decrease in the discharge characteristics that would be caused by the increase in the pulverization load, the peak intensity ratio (I₀₀₂/I₁₀₁) of the negative electrode mixture is preferably 1 or less.

In the X-ray diffraction pattern, the peak of the (002) plane is a peak appearing in a range of 2θ = 33.5 to 35.0 deg. The peak of the (101) plane is a peak appearing in a range of 2θ = 35.5 to 37.0 deg.

The X-ray diffraction measurement (XRD measurement) of the negative electrode mixture can be performed in the following procedure.
First, a negative electrode is cut into a size of 2 cm × 2 cm to obtain a measurement sample. The X-ray diffraction measurement is performed on this measurement sample using an X-ray diffraction measurement apparatus (for example, MiniFlex600 manufactured by Rigaku Corporation). The measurement conditions are as follows.

### (Measurement conditions)

X-ray: Cu-Kα ray
Tube voltage: 40 kV
Tube current: 15 mA
Scanning range: 20° to 100°
Step width: 0.02°
Scanning speed: 5°/min

Then, the crystal structure of the zinc oxide powder can be analyzed using X-ray analysis software (for example, PDXL manufactured by Rigaku Corporation).

The peak intensity ratio (I₀₀₂/I₁₀₁) of the negative electrode mixture can be adjusted by the type or composition of zinc oxide particles used for preparing the negative electrode mixture. For example, during the preparation of the negative electrode mixture, zinc oxide particles having a peak intensity ratio (I₀₀₂/I₁₀₁) of 0.5 or more in the X-ray diffraction pattern are used as the negative electrode active material in a proportion of at least a predetermined amount, thereby adjusting the peak intensity ratio (I₀₀₂/I₁₀₁) of the negative electrode mixture to fall within the above-described range.

The zinc oxide particles having a peak intensity ratio (I₀₀₂/I₁₀₁) of 0.5 or more in the X-ray diffraction pattern can be obtained by sintering the zinc oxide powder and then pulverizing the sintered zinc oxide powder. Therefore, the peak intensity ratio of the zinc oxide particles used for preparing the negative electrode mixture can be adjusted by a pulverization load (pulverization strength or pulverization time) during the preparation of the zinc oxide particles. For example, when the pulverization load is appropriately reduced, the peak intensity ratio (I₀₀₂/I₁₀₁) of the zinc oxide particles tends to be appropriately increased.

The form of the zinc oxide in the negative electrode depends on whether activation treatment has been performed or not, the degree of charge and discharge, and the like, but is, for example, a particle shape. That is, the negative electrode mixture may contain zinc oxide particles.

The median diameter of the zinc oxide particles is not particularly limited, but is preferably 3.0 µm or more and more preferably 10 µm or more. When the median diameter of the zinc oxide particles is 3.0 µm or more, the pulverization strength during the preparation of the zinc oxide particles can be further reduced, and thus the decrease in crystallinity can be further suppressed. In addition, the specific surface area of the zinc oxide particles is appropriately reduced, and thus the amount of water for preparing the slurry can be further reduced, thereby further improving the productivity. In addition, from the viewpoint of further reducing the surface irregularities of the negative electrode or suppressing self-discharge by facilitating mixing with negative electrode additives such as bismuth oxide and indium oxide, the median diameter of the zinc oxide particles is preferably 20 µm or less.

The median diameter means a median diameter at which the cumulative value based on mass is 50%. The median diameter of the zinc oxide particles can be measured by a laser diffraction and scattering method using a particle diameter distribution measurement apparatus.

The median diameter of the zinc oxide particles can be adjusted by the pulverization load (pulverization strength or pulverization time). For example, when the pulverization strength is reduced or the pulverization time is shortened, the median diameter of the zinc oxide particles tends to increase.

The shape of the zinc oxide particles is not particularly limited, and may be irregular or may be spherical. From the viewpoint of increasing the filling density of the active material, the shape is preferably spherical.

The content of the zinc oxide particles in the negative electrode mixture is not particularly limited, but is, for example, preferably 40% by mass or more based on the total mass of the negative electrode active material. When the content of the zinc oxide particles is 40% by mass or more, the reactivity of the zinc oxide particles can be further increased, and the discharge characteristics of the battery can be further improved. From the same viewpoint, the content of the zinc oxide particles in the negative electrode mixture is more preferably 50% by mass or more and 90% by mass or less based on the total mass of the negative electrode active material.

### 1-2-2. Second zinc oxide particles

The negative electrode mixture may further contain zinc oxide particles having a particle diameter different from that of the zinc oxide particles described above. For example, the negative electrode mixture may further contain second zinc oxide particles having a median diameter smaller than that of the zinc oxide particles described above. The median diameter of the second zinc oxide particles is preferably 2 µm or less and more preferably 0.5 µm or more and 2 µm or less. As described above, by further containing the second zinc oxide particles having a median diameter of 2 µm or less, the filling density of the negative electrode mixture can be further increased, and the energy density of the battery can be further increased.

The second zinc oxide particles may be zinc oxide particles manufactured by a normal method, unlike the above-described zinc oxide particles.

The content ratio between the zinc oxide particles and the second zinc oxide particles in the negative electrode mixture is not particularly limited. For example, the content of the zinc oxide particles with respect to the sum of the content of the zinc oxide particles and the content of the second zinc oxide particles in the negative electrode mixture is preferably 50% by mass or more, more preferably 60% by mass or more, and still more preferably 70% by mass or more. When the content of the zinc oxide particles is 50% by mass or more, the peak intensity ratio (I₀₀₂/I₁₀₁) of the negative electrode mixture in the X-ray diffraction pattern can be further increased, and the discharge characteristics of the battery can be further improved. On the other hand, the content of the zinc oxide particles is preferably 90% by mass or less and more preferably 80% by mass or less. When the content of the zinc oxide particles is 90% by mass or less, the gaps between the zinc oxide particles having a large particle diameter can be more easily filled with the second zinc oxide particles having a small particle diameter, and thus the filling density of the active material of the negative electrode and thus the energy density of the battery can be further increased.

The sum of the amounts of the zinc oxide particles and the second zinc oxide particles in the negative electrode mixture is not particularly limited. For example, when these zinc oxide particles are contained as the negative electrode active material, the sum of the amount of the zinc oxide particles and the amount of the second zinc oxide particles is preferably 50% by mass or more and more preferably 70% by mass or more based on the total mass of the negative electrode active material. In addition, the value of the sum of the amount of the zinc oxide particles and the amount of the second zinc oxide particles based on the total mass of the negative electrode active material in the negative electrode mixture is not particularly limited, but can usually be set to 90% by mass or less.

### 1-2-3. Additional components

The negative electrode mixture may further contain, as necessary, an additional negative electrode active material, a negative electrode additive, a binder, or the like, in addition to the zinc oxide.

The additional negative electrode active material includes at least one of zinc, zinc alloys, and zinc-containing compounds. Examples of the metal constituting the zinc alloy, in addition to zinc, include bismuth, aluminum, and indium. Examples of the zinc-containing compounds include, zinc hydroxide, zinc sulfide, tetrahydroxyzinc ion salts, zinc halides, zinc carboxylate compounds such as zinc acetate, zinc tartrate, and zinc oxalate, magnesium zincate, calcium zincate, barium zincate, zinc borate, zinc silicate, zinc aluminate, zinc fluoride, zinc carbonate, zinc hydrogen carbonate, zinc nitrate, and zinc sulfate. Among them, the additional negative electrode active material preferably contains zinc (metal zinc). Metal zinc can serve as a discharge reserve and also a conductive material.

The additional negative electrode active material is, for example, in a powder form. When, for example, zinc or a zinc alloy is used as the additional negative electrode active material, the median diameter thereof may be 10 µm or more and 1000 µm or less. When a zinc-containing compound is used, the median diameter thereof may be 0.1 µm or more and 100 µm or less. The median diameter can be measured by the same method as described above.

The content of the negative electrode active material in the negative electrode mixture may be, for example, 75% by mass or more, and preferably 90% by mass or more and 95% by mass or less based on the total mass of the negative electrode mixture.

The negative electrode additive may be a component that, for example, reduces the elution of the negative electrode active material into an electrolyte. Examples of such a negative electrode additive include bismuth oxide, bismuth hydroxide, indium oxide, indium hydroxide, potassium oxalate, and hydrates thereof. For example, when potassium oxalate and/or a hydrate thereof is eluted into the electrolyte, the potassium oxalate and/or the hydrate thereof dissociates into oxalate ions. As a result, the zinc ion eluted in the electrolyte forms a poorly soluble salt with oxalate ions, which covers the surface of the negative electrode active material, thereby reducing the contact between the metal zinc of the negative electrode active material and the electrolyte solution.

When the negative electrode mixture contains a negative electrode additive, the content of the negative electrode additive in the negative electrode mixture may be, for example, 1% by mass or more and 20% by mass or less, and preferably 3% by mass or more and 10% by mass or less based on the total mass of the negative electrode mixture.

The binder has a function of binding a negative electrode active material and a negative electrode additive to each other and further has a function of binding the negative electrode active material, the negative electrode additive, and the like to a current collector. Examples of the binder include hydroxypropyl cellulose, carboxymethyl cellulose, polyvinyl alcohol, polyvinylpyrrolidone, polyacrylic acid, sodium polyacrylate, polyimide, polyamideimide, polyamide, styrene-butadiene rubber, polyethylene oxide, polytetrafluoroethylene, polyvinylidene fluoride, perfluoroalkoxy fluororesin, and copolymers of tetrafluoroethylene and hexafluoropropylene. Among them, a styrene-butadiene rubber is preferable from the viewpoint that the rubber has a high binding effect and an alkali resistance.

When the negative electrode mixture contains a binder, the content of the binder in the negative electrode mixture may be any amount capable of sufficiently bonding the negative electrode mixture to the current collector, but may be, for example, 1% by mass or more and 5% by mass or less, and preferably 1% by mass or more and 3% by mass or less based on the total mass of the negative electrode mixture.

### 1-2-4. Physical properties

### (Particle size distribution of all particle groups including zinc oxide)

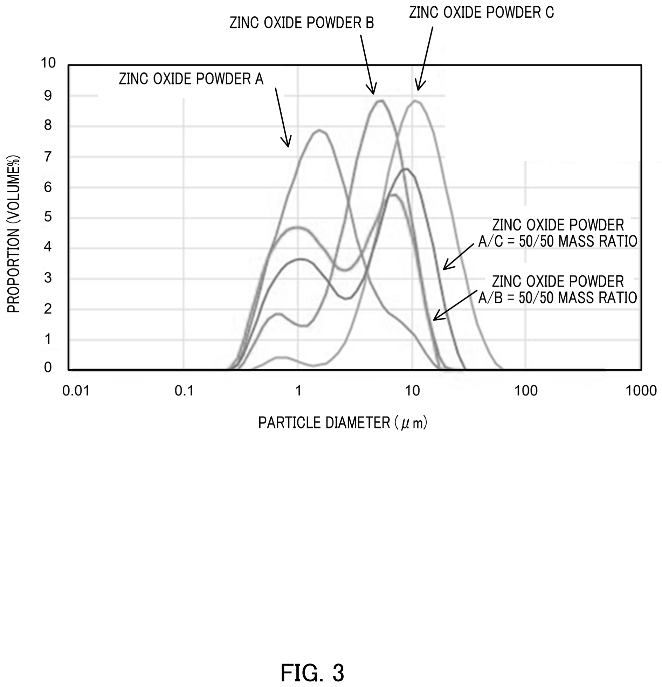

When the negative electrode mixture contains, for example, zinc oxide particles having a median diameter of 3 µm or more and second zinc oxide particles having a median diameter of 2 µm or less, in the particle size distribution of all particle groups including the zinc oxide particles and the second zinc oxide particles in the negative electrode mixture, it is preferable that a first peak is present in a particle diameter range of 3 µm or more (preferably 3 µm or more and 20 µm or less) and a second peak is present in a particle diameter range of 2 µm or less (see FIG. 3 described below).

The particle size distribution can be measured using a Mastersizer 3000 laser diffraction particle size analyzer manufactured by Malvern Panalytical, by adding the zinc oxide particles to pure water to have a defined concentration, and subjecting the mixture to ultrasonic dispersion and stirring with a stirrer.

### 1-3. Method for manufacturing negative electrode

The negative electrode according to the present embodiment can be manufactured by any method. For example, the negative electrode according to the present embodiment can be manufactured through 1) a step of providing zinc oxide particles having the peak intensity ratio (I₀₀₂/I₁₀₁) of 0.5 or more and 2) a step of preparing a negative electrode mixture containing the provided zinc oxide particles.

### 1) Step of providing zinc oxide particles

First, zinc oxide particles having the peak intensity ratio (I₀₀₂/I₁₀₁) of 0.5 or more are provided. The peak intensity ratio of the zinc oxide particles can be measured in the same manner as the X-ray diffraction measurement described above, except that an aggregate (zinc oxide powder) of the zinc oxide particles to be used for preparing the negative electrode mixture is used as the measurement sample.

The zinc oxide particles may be a commercially available product or may be prepared. For preparing the zinc oxide particles, for example, the zinc oxide particles can be obtained by sintering an existing zinc oxide powder and then pulverizing the sintered body. The particles obtained in this way are also referred to as calcined zinc oxide. As described above, the peak intensity ratio of the zinc oxide particles in the raw material stage can be adjusted by the pulverization load (pulverization strength or pulverization time) during the preparation of the zinc oxide particles.

The calcination temperature may be any temperature at which the sintered body is obtained, and can be, for example, 1000°C or higher and preferably 1100°C to 1150°C.

The pulverization of the sintered body can be performed by any method. The pulverization may be performed under conditions (pulverization strength and pulverization time) that result in a desired particle diameter, thereby obtaining zinc oxide particles having the median diameter described above.

### 2) Step of preparing negative electrode mixture

Next, a negative electrode mixture containing the provided zinc oxide particles is prepared.

Specifically, the provided zinc oxide particles and, as necessary, at least one of the above-described second zinc oxide particles, additional negative electrode active materials, negative electrode additives, binders, water, and solvents are mixed and kneaded to prepare a negative electrode mixture slurry.

For example, the negative electrode mixture slurry may be prepared by mixing zinc oxide particles having a median diameter of 3 µm or more and 20 µm or less with second zinc oxide particles having a median diameter of 2 µm or less. The mixing ratio between the zinc oxide particles having a median diameter of 3 µm or more and 20 µm or less and the second zinc oxide particles may be the same as the content ratio between the zinc oxide particles and the second zinc oxide particles in the above-described negative electrode mixture. As a result, a negative electrode mixture slurry containing the zinc oxide particles having a median diameter of 3 µm or more and 20 µm or less and the second zinc oxide particles having a median diameter of 1 µm or less can be obtained. More preferred ranges of the median diameters of the zinc oxide particles and the second zinc oxide particles during the preparation of the negative electrode mixture slurry and the method for measuring the median diameters are the same as those described above. In addition, the particle size distribution of all particle groups including zinc oxide is also the same as that described above.

In addition, during the preparation of the negative electrode mixture slurry, the ratio (I₀₀₂/I₁₀₁) of the peak intensity of the (002) plane in the X-ray diffraction pattern of the second zinc oxide particles to the peak intensity of the (101) plane in the X-ray diffraction pattern is, for example, preferably smaller than 0.5, and more preferably 0.3 or more and less than 0.5. The amount of each component used for preparing the negative electrode mixture slurry is also set so that the content of each component in the negative electrode mixture falls within the above-described range.

The obtained negative electrode mixture slurry can then be applied to, for example, a current collector, dried, and then, as necessary, rolled to prepare a negative electrode mixture (for example, a negative electrode mixture layer).

### 2. Zinc battery

### 2-1. Configuration

The zinc battery according to an embodiment of the present invention will be described. In the present embodiment, as an example of the zinc battery, a nickel-zinc secondary battery will be described.

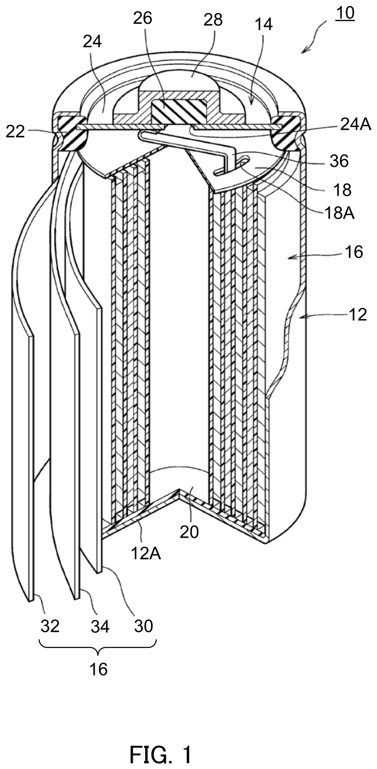

FIG. 1 is a partially cutaway perspective view of nickel-zinc secondary battery 10 of the present embodiment. FIG. 1 partly omits the illustration of wound body 16.

As illustrated in FIG. 1, nickel-zinc secondary battery 10 is, for example, a cylindrical battery of an FA size, and includes outer can 12, sealing body 14, wound body 16 (electrode group), an electrolyte (not illustrated), upper insulation member 18, and lower insulation member 20.

Outer can 12 is a container for housing wound body 16, and is, in the present embodiment, a bottomed cylindrical container having an open upper end. Outer can 12 is conductive, and bottom wall 12A thereof functions as a negative electrode terminal. The material of outer can 12 may be any material as long as it is conductive and has corrosion resistance against the electrolyte and an electrochemical reaction in the battery, and usually includes a metal material such as iron and steel.

Sealing body 14 is fixed to the opening of outer can 12 via insulating packing 22, and seals outer can 12 and functions as a positive electrode terminal. Sealing body 14 includes lid plate 24, valve body 26, and positive electrode terminal 28.

Lid plate 24 is a conductive member having a disk shape and includes through-hole 24A at the center thereof. Insulation packing 22 has a ring shape surrounding lid plate 24, and is interposed between outer can 12 and sealing body 14. Lid plate 24 and insulation packing 22 cooperate with each other to hermetically close the opening of outer can 12.

Valve body 26 is a member made of rubber, and is disposed on the outer surface of lid plate 24 to block through-hole 24A.

Positive electrode terminal 28 is a member having a cylindrical shape with a metal flange, and is electrically connected to an outer surface of lid plate 24. Positive electrode terminal 28 presses valve body 26 toward lid plate 24. In addition, the positive electrode terminal 28 includes a gas vent hole (not illustrated).

Further, in the normal operation, through-hole 24A is hermetically closed by valve body 26. When gas is generated within outer can 12 and the inner pressure thereof increases, on the other hand, valve body 26 is compressed by the inner pressure to open through-hole 24A, and as a result, gas is released to the outside from the inside of outer can 12 through through-hole 24A and the gas vent hole (not illustrated) of positive electrode terminal 28. That is, through-hole 24A, valve body 26, and positive electrode terminal 28 form a safety valve for a battery.

Wound body 16 includes positive electrode 30, negative electrode 32, and separator 34. That is, wound body 16 is obtained by winding a stack of separator 34, positive electrode 30, separator 34, and negative electrode 32, with negative electrode 32 positioned on the outer side.

Negative electrode 32 is disposed on the outermost peripheral surface of wound body 16 and is in contact with the inner wall surface of outer can 12. That is, negative electrode 32 and outer can 12, serving as a negative electrode terminal, are electrically connected to each other.

Meanwhile, positive electrode lead 36 is connected to positive electrode 30 of wound body 16. Positive electrode lead 36 is connected to lid plate 24. Positive electrode 30 and positive electrode terminal 28 are thus electrically connected to each other via positive electrode lead 36 and lid plate 24.

Upper insulation member 18 is disposed between wound body 16 and lid plate 24. As a result, negative electrode 32 of wound body 16 does not contact sealing body 14. In addition, upper insulation member 18 includes slit 18A for allowing positive electrode lead 36 to pass therethrough.

Lower insulation member 20 is disposed between wound body 16 and the bottom of outer can 12. Positive electrode 30 of wound body 16 thus does not contact the bottom of outer can 12.

An alkaline electrolyte (not illustrated) is sealed in outer can 12. The alkaline electrolyte is an aqueous solution containing an alkali metal hydroxide. Examples of the alkali metal hydroxide include potassium hydroxide, sodium hydroxide, and lithium hydroxide. Among them, potassium hydroxide and lithium hydroxide are preferable. One type or a combination of two or more types of the alkali metal hydroxide may be used.

The concentration of the alkali metal hydroxide in the alkaline electrolyte is not particularly limited, but is preferably 25% by mass or more and 45% by mass or less (5.0 N or more and 8.0 N or less). When the concentration of the alkali metal hydroxide in the alkaline electrolyte is 25% by mass or more, the ion conductivity can be further increased. When the concentration of the alkali metal hydroxide in the alkaline electrolyte is 45% by mass or less, the elution of zinc oxide from the negative electrode can be further suppressed.

Further, a zinc compound such as zinc oxide or zinc hydroxide may be further dissolved in the alkaline electrolyte. The above dissolution is for the purpose of further suppressing the elution of zinc or zinc oxide into the electrolyte from the negative electrode. For example, the alkaline electrolyte preferably has zinc oxide dissolved to a saturation concentration. That is, the concentration of the zinc ion in the alkaline electrolyte is preferably 4% by mass or more in terms of zinc oxide. The concentration of zinc ion in the alkaline electrolyte can be measured by high-frequency inductivity coupled plasma optical emission spectroscopy (ICP-OES).

In the following, each member constituting wound body 16 will be described.

### (1) Positive electrode

Positive electrode 30 includes a positive electrode current collector and a positive electrode mixture.

The positive electrode current collector may be, for example, a metal foil, a metal porous body that is mesh-shaped, sponge-shaped, fibrous, or felt-shaped, or a punched metal, an expanded metal, or the like. The material of the positive electrode current collector may be a metal material that is stable even at the reaction potential of the positive electrode, for example, nickel or stainless steel, and is preferably nickel. That is, the positive electrode current collector may be foamed nickel or a mesh-shaped, sponge-shaped, fibrous metal body made of nickel or subjected to nickel plating.

The positive electrode mixture is held by the positive electrode current collector and contains a positive electrode active material.

### (Positive electrode active material)

The positive electrode active material includes particles containing nickel hydroxide. At least one of cobalt (Co), zinc (Zn), or cadmium (Cd) may be solid solubilized in the nickel hydroxide. The amount of the solid-solubilized metal element in the particles including nickel hydroxide can be 5% to 10% by mass based on the total mass of the particles.

In addition, the particle containing nickel hydroxide may be a composite particle including a base particle containing nickel hydroxide and a coating layer containing a cobalt compound doped with an alkali metal. The amount of cobalt (Co) in the composite particles can be 2% to 5% by mass based on the total mass of the composite particles.

The coating layer is disposed to cover at least a part of the surface of the base particle. The coating layer preferably includes a cobalt compound doped with an alkali metal. Examples of the alkali metal include sodium (Na), lithium (Li), and the like. One type or two or more types of the alkali metal may be included. The cobalt compound is preferably a trivalent or higher-order cobalt compound such as cobalt oxyhydroxide (CoOOH). As described above, the higher-order cobalt compound in which the alkali metal is incorporated into the crystal has high conductivity.

The presence or absence of the coating layer can be confirmed by producing a cross-sectional sample of the particles containing nickel hydroxide using a cross section polisher and observing the cross section with a scanning electron microscope (SEM).

The median diameter of the particles is not particularly limited, but is, for example, preferably 10 to 20 µm. That is, when the median particle diameter of the particles is within the above-described range, the surface area of the particles is further increased, and thus the utilization rate of the positive electrode active material can be further increased. The median diameter can be measured in the same manner as described above.

The content of the positive electrode active material in the positive electrode mixture can be, for example, 80% by mass or more and 100% by mass or less, and preferably 90% by mass or more and 100% by mass or less based on the total mass of the positive electrode mixture. The total mass of the positive electrode mixture means the total mass of the positive electrode mixture in a dried state (the total mass of solid contents of the positive electrode mixture).

### (Additional components)

The positive electrode mixture may further contain a positive electrode additive and/or a binder as necessary.

Examples of the positive electrode additive include yttrium oxide; cobalt compounds such as cobalt oxide, cobalt metal, and cobalt hydroxide; zinc compounds such as metal zinc, zinc oxide, and zinc hydroxide; rare earth compounds such as erbium oxide; and niobium oxide. For example, a zinc compound such as zinc oxide or zinc hydroxide may be added for the purpose of suppressing the swelling of the positive electrode mixture. The content of the zinc compound may be 0.1 to 5% by mass based on the total mass of the positive electrode active material.

The binder has a function of binding a positive electrode active material and a positive electrode additive to each other and of binding the positive electrode active material and the positive electrode additive to a positive electrode current collector. The binder may be a hydrophilic or hydrophobic polymer and examples thereof include hydroxypropyl cellulose, carboxymethyl cellulose (CMC), sodium polyacrylate, and fluorine-based polymers (such as polytetrafluoroethylene (PTFE) and polyvinylidene fluoride (PVdF)).

### (2) Negative electrode

The above-described negative electrode may serve as negative electrode 32.

### (3) Separator

As described above, separator 34 is disposed between positive electrode 30 and negative electrode 32 (see FIG. 1). Separator 34 may be a nonwoven fabric or a microporous film.

The material of the nonwoven fabric and the microporous film is not limited, and may be a polyolefin such as polyethylene or polypropylene, a polyester such as polyethylene terephthalate or polybutylene terephthalate, a polyphenylene sulfide, a polyamide, or the like. Among them, a polyolefin is preferable, and polypropylene is more preferable from the viewpoint of mechanical strength and shutdown characteristics.

The nonwoven fabric and the microporous film may each be provided with a hydrophilic functional group by hydrophilization treatment. For example, the nonwoven fabric or the microporous film may be a material provided with sulfonic groups by sulfonation treatment such as immersion in an acid containing a sulfuric acid group, such as sulfuric acid or fuming sulfuric acid. It is thus possible to further facilitate the alkaline electrolyte to wet a nonwoven fabric or a microporous film.

One type or a combination of two or more types of separator 34 may be used. For example, a stack of a nonwoven fabric and a micro-porous film subjected to hydrophilic treatment may be used as separator 34.

### 2-2. Manufacturing method

The above-described nickel-zinc secondary battery can be manufactured by any method. For example, the nickel-zinc secondary battery can be manufactured through 1) a step of providing a positive electrode and a negative electrode, and 2) a step of obtaining a nickel-zinc secondary battery using the provided positive electrode and negative electrode.

### Step 1)

First, a positive electrode and a negative electrode are provided. The negative electrode can be provided by the above-described method. The positive electrode can also be provided by the same method as the negative electrode.

### Step 2)

Next, a nickel-zinc secondary battery is produced using the provided positive electrode and negative electrode.

Specifically, the provided positive electrode 30 and negative electrode 32 are stacked with separator 34 (for example, a stack of a nonwoven fabric and a microporous film) therebetween and wound to produce a wound body. Positive electrode lead 36 is welded to one end of positive electrode 30 in the longitudinal direction of the positive electrode. For example, separator 34, positive electrode 30, separator 34, and negative electrode 32 are stacked in this order and wound along the longitudinal direction so that negative electrode 32 is on the outside, thereby obtaining wound body 16.

After housing obtained wound body 16 in outer can 12 and injecting an electrolyte into outer can 12, the opening portion of outer can 12 is sealed with sealing body 14.

After leaving the obtained battery for a predetermined time, activation processing is performed by charging the battery under a predetermined condition. The activation condition can be adjusted according to the characteristics of the electrode active materials (positive electrode active material and negative electrode active material). In the present embodiment, for example, the following cycle can be repeated five times: the battery is charged to its nominal capacity at a constant current-constant voltage with an upper voltage limit of 1.9 V, and then discharged to 1.3 V. As a result, the nickel-zinc battery 10 can be obtained.

### 3. Variation

In the above-described embodiment, the nickel-zinc secondary battery has been described as an example of the zinc battery, but the present invention is not limited to the above-described embodiment. For example, the zinc battery may be a zinc-air battery (for example, a zinc-air secondary battery) in which the positive electrode is an air electrode, or may be a silver-zinc battery (for example, a silver-zinc secondary battery) in which the positive electrode is a silver oxide electrode. In addition, the nickel-zinc secondary battery is not limited to the cylindrical nickel-zinc secondary battery and may be a square or laminate type.

### Examples

The present invention will be described in detail based on Examples, but the present invention is not limited to these Examples.

### 1. Production and measurement of zinc oxide powder

### 1-1. Production of zinc oxide powder

### <Production of zinc oxide powder A>

High-purity metal zinc was melted, vaporized, and oxidized in air. As a result, high-purity zinc oxide powder A having a median diameter of 0.75 µm and satisfying the first standard in JIS K 1410-1995 was obtained.

### <Production of zinc oxide powder B>

A zinc oxide powder produced in the same manner as the zinc oxide powder A was calcined at 1100°C to 1150°C to obtain a sintered body of the zinc oxide powder. By pulverizing the sintered body, zinc oxide powder B having a median diameter of 4.4 µm was obtained.

### <Production of zinc oxide powder C>

Zinc oxide powder C having a median diameter of 12.0 µm was obtained in the same manner as the zinc oxide powder B, except that the pulverization strength was adjusted by changing the pulverization method of the sintered body.

### 1-2. Measurement

The median diameter, the specific surface area, and the X-ray diffraction pattern of each of the zinc oxide powders A to C were measured by the following methods.

### 1-2-1. Median diameter

Using a particle diameter distribution measurement apparatus, the median diameter at which the cumulative value based on mass was 50% was measured by a laser diffraction and scattering method.

### 1-2-2. Specific surface area

The specific surface area was measured by the BET method using nitrogen adsorption in accordance with ASTM-D6556.

### 1-2-3. X-ray diffraction measurement (XRD)

The powder X-ray diffraction measurement was performed on each of the zinc oxide powders A to C, and the crystal structure thereof was analyzed. As the measurement apparatus, MiniFlex600 (manufactured by Rigaku Corporation) was used, and as the powder X-ray analysis software, PDXL (manufactured by Rigaku Corporation) was used. The measurement conditions were set as follows.

### (Measurement conditions)

X-ray: Cu-Kα ray
Tube voltage: 40 kV
Tube current: 15 mA
Scanning range: 20° to 100°
Step width: 0.02°
Scanning speed: 5°/min

### 1-2-4. Particle size distribution measurement

The particle size distributions were measured by the following methods for the zinc oxide powder A, the zinc oxide powder B, the zinc oxide powder C, a mixture of the zinc oxide powder A and the zinc oxide powder B (A/B = 50/50 in mass ratio), and a mixture of the zinc oxide powder A and the zinc oxide powder C (A/C = 50/50 in mass ratio).

Specifically, the particle size distribution was measured using a Mastersizer 3000 laser diffraction particle size analyzer manufactured by Malvern Panalytical, by adding the zinc oxide particles to pure water to have a defined concentration, and subjecting the mixture to ultrasonic dispersion and stirring with a stirrer.

### 1-2-5. Measurement Results

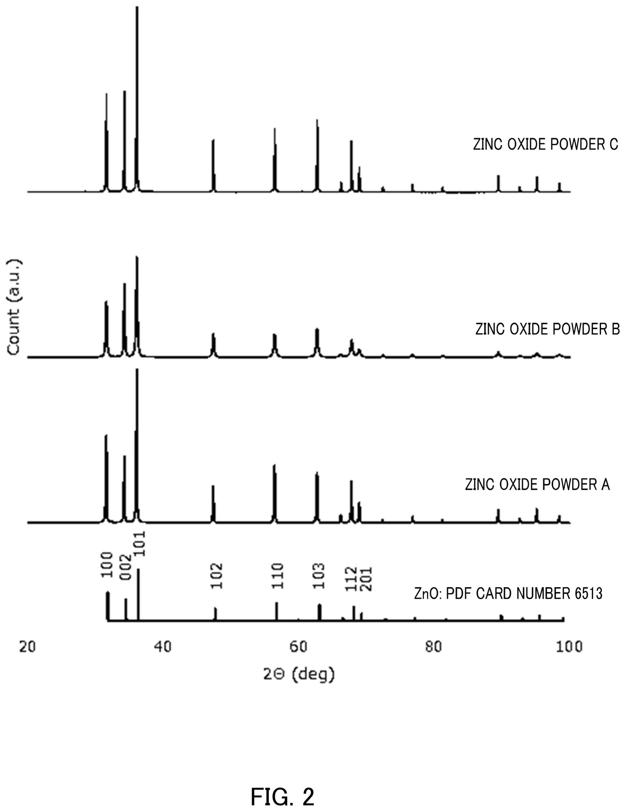

Table 1 shows the measurement results of the zinc oxide powders A to C. In addition, FIG. 2 illustrates the X-ray diffraction patterns of the zinc oxide powders A to C. In FIG. 2, the X-ray diffraction patterns of the zinc oxide powders A, B, and C are illustrated in order from the bottom. In addition, FIG. 3 illustrates the particle size distribution measurement results of the zinc oxide powders.

**[Table 1]**

| Zinc oxide powder | A | B | C |
|---|---|---|---|
| Median diameter [µm] | 1.5 | 4.4 | 12.0 |
| Specific surface area [m²/g] | 3.5 | 1.3 | 0.3 |
| Intensity ratio between XRD peaks: I (002)/I (101) | 0.42 | 0.73 | 0.53 |

As illustrated in FIG. 2, it can be seen that the X-ray diffraction measurement pattern of the zinc oxide powder A is in satisfactory agreement with the literature values, whereas for the zinc oxide powders B and C, the peak intensities of 002, 102, and 103, which contain much c-axis information, are relatively strong compared to the literature value. That is, it was found that the peak intensity ratio (I₀₀₂/I₁₀₁) of the zinc oxide powder A was lower than 0.5, whereas the peak intensity ratios (I₀₀₂/I₁₀₁) of the zinc oxide powders B and C were 0.5 or more.

In addition, in the zinc oxide powder B, the peak was broadened as compared with the zinc oxide powders A and C. This indicates that introduction of oxygen deficiency, a distortion of the crystal structure, anisotropy, and the like occur due to the stress during pulverization.

In addition, as illustrated in FIG. 3, in the mixture of the zinc oxide powder A and the zinc oxide powder B and the mixture of the zinc oxide powder A and the zinc oxide powder C, there is a first peak (derived from the zinc oxide powder B or C) in a particle diameter range of 3 µm or more and 20 µm or less, and there is a second peak (derived from the zinc oxide powder A) in a particle diameter range of 2 µm or less.

### 2. Production, measurement, and evaluation of negative electrode

### 2-1. Production of negative electrode

### <Production of negative electrode 1>

A negative electrode mixture slurry was produced by mixing 80 parts by mass of the zinc oxide powder B, 20 parts by mass of the zinc oxide powder A, 25 parts by mass of the metal zinc powder (the sum of the amounts of the zinc oxide powder B, the zinc oxide powder A, and the metal zinc powder was 91.7% by mass with respect to the solid content (the total mass of the negative electrode mixture) of the negative electrode mixture slurry), and predetermined amounts of bismuth oxide powder, potassium oxalate monohydrate, a thickener, water, and styrene butadiene rubber.

The obtained negative electrode mixture slurry was applied onto a non-porous copper foil having a tin-plating on its surface, dried, and then rolled with a rolling roll and cut into a predetermined size. As a result, negative electrode having a capacity per unit area of 25 mAh/cm² was produced.

### <Production of negative electrode 2>

Negative electrode 2 was produced in the same manner as in the negative electrode 1, except that the zinc oxide powder B was changed to the zinc oxide powder C.

### <Production of negative electrodes 3 and 4>

Negative electrodes 3 and 4 were produced in the same manner as in the negative electrode 2, except that the contents of the zinc oxide powder C and the zinc oxide powder A were changed as shown in Table 2. The capacity per unit area was 23.6 mAh/cm².

### <Production of negative electrode 5>

Negative electrode 5 was produced in the same manner as in the negative electrode 2, except that the zinc oxide powder A was not added and 100 parts by mass of the zinc oxide powder C was used. The capacity per unit area was 23.6 mAh/cm².

### <Production of negative electrode 6>

Negative electrode 6 was produced in the same manner as in the negative electrode 1, except that the zinc oxide powder B was not added and 100 parts by mass of the zinc oxide powder A was used.

### 2-2. Measurement and Evaluation

### 2-2-1. X-ray diffraction measurement (XRD)

The X-ray diffraction measurement was performed on each of the obtained negative electrodes 1 to 6. The X-ray diffraction measurement was performed by the same method and under the same conditions as described above except that a sample obtained by cutting the produced negative electrode into a size of 2 cm × 2 cm was used as the measurement sample.

### 2-2-2. Productivity

The productivity in the production of the negative electrode mixture slurry was evaluated according to the following criteria.
Good: even when the water content of the slurry was 80% or less with respect to the amount of the zinc oxide particles (or the sum of the amounts of the zinc oxide particles and second zinc oxide particles), the stability, the fluidity, and the drying rate of the slurry were generally satisfactory
Poor: when the water content of the slurry was 80% or less with respect to the amount of the zinc oxide particles (or the sum of the amounts of the zinc oxide particles and second zinc oxide particles), the stability, the fluidity, and the drying rate of the slurry were generally poor

The measurement results are shown in Table 2.

**[Table 2]**

| | | Negative electrode | | | | | |
|---|---|---|---|---|---|---|---|
| | | 1 | 2 | 3 | 4 | 5 | 6 |
| Zinc oxide powder (parts by mass) | A | 20 | 20 | 30 | 50 | | 100 |
| | B | 80 | | | | | |
| | C | | 80 | 70 | 50 | 100 | |
| Intensity ratio between XRD peaks: I (002)/I (101) | | 0.67 | 0.62 | 0.54 | 0.53 | 0.69 | 0.29 |
| Productivity | | Good | Good | Good | Good | Good | Poor |
| Remarks | | Example | Example | Example | Example | Example | Comparative Example |

As shown in Table 2, it was found that the peak intensity ratio (I₀₀₂/I₁₀₁) of the negative electrode 6 using only the zinc oxide powder A was lower than 0.4, whereas the peak intensity ratios (I₀₀₂/I₁₀₁) of the negative electrodes 1 to 5 using the zinc oxide powder B or C were 0.4 or more. From these results, it was found that the X-ray diffraction pattern of a negative electrode corresponds to the X-ray diffraction pattern of zinc oxide powder used therefor, and the crystal structure was maintained.

In addition, it can be seen that the negative electrode mixtures using the zinc oxide powder B or C (i.e., negative electrode mixture of the negative electrodes 1 to 5) require less water amount during the production of the slurry than the negative electrode mixture not using these powders (i.e., negative electrode mixture of the negative electrode 6), and thus have satisfactory productivity.

### 3. Production and evaluation of zinc battery

3-1. Production of zinc battery
[Production of zinc battery 1]

### <Production of positive electrode>

### (1) Preparation of positive electrode active material particles

The positive electrode active material particles were prepared by a reaction crystallization method.

Specifically, an aqueous solution was prepared by mixing nickel sulfate, zinc sulfate, and cobalt sulfate, and ammonia ion was added to the aqueous solution to produce an ammine complex. In addition, the pH, the reaction temperature, and the ammonium ion concentration were adjusted to predetermined conditions, and an aqueous sodium hydroxide solution was added to the mixture and the reaction was continuously performed, thereby gradually growing crystals. As a result, base particles of nickel hydroxide in which zinc and cobalt are solid-solubilized were obtained.

The obtained base particles were added to an aqueous ammonia solution, and a cobalt sulfate aqueous solution was added thereto while adjusting the pH, thereby causing cobalt hydroxide to be precipitated on the surface of the base particles. An aqueous solution of sodium hydroxide was sprayed onto the obtained particles in an oxygen-containing atmosphere, and heat treatment was performed to cause chemical oxidation, thereby converting the precipitated cobalt hydroxide into cobalt oxyhydroxide (a conductive cobalt compound).

Positive electrode active material particles were thus obtained, each including a coating layer containing cobalt oxyhydroxide having sodium introduced therein on the surface of the base particle.

### (2) Production of positive electrode

A positive electrode mixture slurry was produced by mixing 100 parts by mass of the positive electrode active material powder composed of the above-described prepared positive electrode active material particles (97.1% by mass with respect to the solid content (the total mass of the positive electrode mixture) of the positive electrode mixture slurry), 1 part by mass of the zinc oxide powder, and predetermined amounts of a cobalt hydroxide powder, a yttrium oxide powder, a niobium oxide powder, a thickener, PTFE, and water. Foamed nickel was filled with the obtained positive electrode mixture slurry, dried, rolled, and cut into a predetermined size. A positive electrode having a capacity per unit area of 13.4 mAh/cm² was thus produced.

### <Production of electrolyte>

An electrolyte was prepared by dissolving 4% by mass of zinc oxide in an aqueous solution containing 6 mol/L of potassium hydroxide and 0.5 mol/L of lithium hydroxide (25.81% by mass of potassium hydroxide and 0.92% by mass of lithium hydroxide, namely the total of 26.73% by mass).

### <Production of battery>

The produced positive electrode, the produced negative electrode 1, and a separator group (in which a nonwoven fabric separator and a polypropylene microporous film subjected to hydrophilic treatment were integrated) were wound together to obtain an electrode group. Specifically, a stack including the separator group, the positive electrode, the separator group, and the negative electrode are stacked in this order was wound to obtain an electrode group in which negative electrode is disposed on the outermost peripheral surface. The obtained electrode group was inserted into an outer can subjected to tin plating.

Then, 5.738 g of the produced electrolyte was injected to produce a cylindrical nickel-zinc secondary battery having a nominal capacity of 2000 mAh.

The thus obtained battery was subjected to an activation treatment by repeating the following cycle five times: the battery was charged to its nominal capacity at a constant current-constant voltage with an upper voltage limit of 1.9 V, and then discharged to 1.3 V.

### [Production of zinc batteries 2 to 6]

Zinc batteries 2 to 6 were produced in the same manner as in the zinc battery 1, except that the type of the negative electrode was changed to the negative electrode shown in Table 3.

### 3-2. Evaluation

### 3-2-1. Cold cranking test (CCA test)

The obtained zinc battery was subjected to a CCA test.

Specifically, first, a constant current constant voltage (CCCV) charging at a rate of 0.5 C and an upper limit voltage of 1.9 V was performed for 24 hours at 25°C. Next, after resting for 24 hours, constant current (CC) discharge was performed at a CCA current for 30 seconds at -18°C. The CCA current was defined as the highest current value at which the zinc battery 1 can pass the criteria.

### (CCA Test Condition)

Charge: CCCV_1.9 V_0.5 C_24 h
Rest: 24 h
Discharge: CCA current
Discharge time: 30 seconds
Temperature: 25°C for charging only, -18°C thereafter

The voltage of the zinc battery after 30 seconds of discharge was then measured. When the voltage was maintained at 0.9 V after 30 seconds of discharge, it was determined as passing the criteria.

### 3-2-2. X-ray diffraction measurement of negative electrode recovered from battery

A battery after the activation and the CCA test was discharged to 1.3 V, and then disassembled to extract the negative electrode. The extracted negative electrode was washed with ion exchange water, and a random portion other than the unreacted portions at the beginning and the end of the winding was sampled and subjected to X-ray diffraction measurement. For the sample, a random portion of the negative electrode other than the above-described unreacted portions cut out to a size of 2 cm × 2 cm was used. The X-ray diffraction measurement was performed under the same conditions and by the same method as the X-ray diffraction measurement of the above-described negative electrode.

### 3-2-3. Evaluation Results

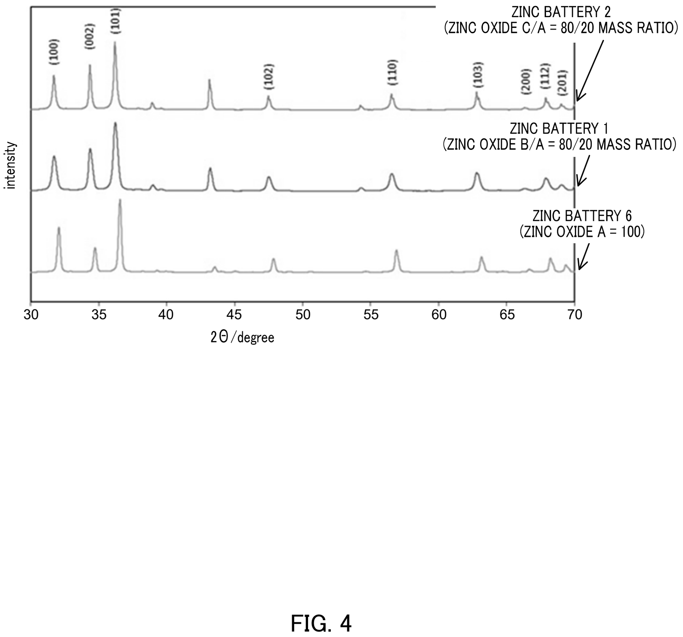

The evaluation results of the zinc batteries 1 to 6 are shown in Table 3. In addition, FIG. 4 illustrates the X-ray diffraction patterns of the negative electrodes recovered from the zinc batteries 1, 2, and 6.

**[Table 3]**

| | | | Zinc battery | | | | | |
|---|---|---|---|---|---|---|---|---|
| | | | 1 | 2 | 3 | 4 | 5 | 6 |
| Configuration | Negative electrode No. | | 1 | 2 | 3 | 4 | 5 | 6 |
| | zinc oxide powder (parts by mass) | A | 20 | 20 | 30 | 50 | | 100 |
| | | B | 80 | | | | | |
| | | C | | 80 | 70 | 50 | 100 | |
| Evaluation | CCA test | Voltage after 30 seconds (V) | 0.932 | 1.061 | 1.064 | 0.964 | 0.969 | < 0.9 |
| | | Pass/Fail Criteria | Pass | Pass | Pass | Pass | Pass | Fail |
| | Intensity ratio between XRD peaks: I (002)/I (101) | | 0.62 | 0.66 | 0.50 | 0.44 | 0.64 | 0.34 |
| Remarks | | | Ex. | Ex. | Ex. | Ex. | Ex. | Comp. Ex. |

As shown in Table 3, in the zinc battery 6 (Comparative Example 1), the voltage after 30 seconds in the CCA test at -18°C was lower than the criteria, whereas in the zinc batteries 1 and 2 (Examples), the voltage after 30 seconds was higher than the criteria of 0.9 V. As described above, in the zinc batteries 1 and 2 using the negative electrode having the XRD peak intensity ratio (I₀₀₂/I₁₀₁) derived from zinc oxide of 0.4 or more, the discharge characteristics in the CCA test were favorable even though the negative electrode contained a large amount of the zinc oxide particles having a large particle diameter and a small surface area, as compared with the zinc battery 6 using the negative electrode having the peak intensity ratio (I₀₀₂/I₁₀₁) of less than 0.4.

From these results, it is considered that by using the negative electrode having the peak intensity ratio (I₀₀₂/I₁₀₁) of 0.4 or more, the improvement in the dischargeability due to the improvement in reactivity was more significantly exhibited than the decrease in the dischargeability due to the decrease in the surface area.

In addition, as illustrated in FIG. 4, the XRD peak intensity ratio (I₀₀₂/I₁₀₁) of a negative electrode recovered from a battery after the CCA test was the same as that of the negative electrode before the negative electrode is assembled in the battery. From this, it was found that the zinc oxide particles having anisotropy used in the negative electrode were stable and maintained the crystal structure even after the negative electrode is assembled in the battery.

Specifically, in the X-ray diffraction patterns of the negative electrodes recovered from the zinc batteries 1 and 2, the peak intensity derived from the (002) plane of the zinc oxide was increased as compared with the negative electrode recovered from the zinc battery 6. This tendency was the same as that of the negative electrode before the negative electrode is assembled in a battery.

In particular, in the X-ray diffraction measurement of the negative electrode recovered from the zinc battery 1, the intensity ratio of the peak derived from the (002) plane near 34° to the peak derived from the (101) plane near 36° having the highest intensity was 0.62, and it was found that this peak intensity ratio was 0.4 or more as in the state of the negative electrode before the negative electrode is assembled in the battery.

### Industrial Applicability

The present invention can provide a negative electrode material for a zinc battery, a negative electrode for a zinc battery, a zinc battery, and a method for manufacturing a negative electrode for a zinc battery, which have favorable productivity and can improve discharge characteristics of a battery.

This application is entitled to or claims the benefit of Japanese Patent Application No.2024-185830, filed on October 22, 2024, the disclosure of which including the specification, drawings and abstract is incorporated herein by reference in its entirety.

## Claims

1. A negative electrode for a zinc battery, the negative electrode comprising:
a negative electrode mixture containing zinc oxide, wherein
in an X-ray diffraction pattern of the negative electrode mixture, a ratio (I₀₀₂/I₁₀₁) of a peak intensity (I₀₀₂) of a (002) plane derived from the zinc oxide to a peak intensity (I₁₀₁) of a (101) plane derived from the zinc oxide is 0.4 or more.

2. The negative electrode according to claim 1, wherein:
the zinc oxide contains a zinc oxide particle; and
the zinc oxide particle has a median diameter of 3 µm or more and 20 µm or less.

3. The negative electrode according to claim 2, wherein
the negative electrode mixture further contains a second zinc oxide particle having a median diameter of 2 µm or less.

4. The negative electrode according to claim 3, wherein
a content of the zinc oxide particle in the negative electrode mixture with respect to a sum of an amount of the zinc oxide particle and an amount of the second zinc oxide particle in the negative electrode mixture is 50% by mass or more.

5. The negative electrode according to any one of claims 1 to 4, further comprising:
a current collector that holds the negative electrode mixture, wherein
the current collector is a non-porous current collector.

6. A zinc battery comprising:
a positive electrode, a negative electrode, and an alkaline electrolyte, wherein
the negative electrode is the negative electrode according to any one of claims 1 to 5.

7. The zinc battery according to claim 6, wherein
the zinc battery is a nickel-zinc secondary battery.

8. A method for manufacturing a negative electrode for a zinc battery, the method comprising:
providing a zinc oxide particle having a ratio (I₀₀₂/I₁₀₁) of a peak intensity (I₀₀₂) of a (002) plane in an X-ray diffraction pattern to a peak intensity (I₁₀₁) of a (101) plane in the X-ray diffraction pattern is 0.5 or more; and
preparing a negative electrode mixture containing the zinc oxide particle.

9. The method according to claim 8, wherein
the zinc oxide particle has a median diameter of 3 µm or more and 20 µm or less.

10. The method according to claim 9, wherein
in the preparing the negative electrode mixture, the negative electrode mixture contains the zinc oxide particle and a second zinc oxide particle having a median diameter of 2 µm or less.

11. The method according to claim 10, wherein
a content of the zinc oxide particle in the negative electrode mixture with respect to a sum of an amount of the zinc oxide particle and an amount of the second zinc oxide particle in the negative electrode mixture is 50% by mass or more.

12. A negative electrode material for a zinc battery, the negative electrode material comprising:
a zinc oxide particle having, in an X-ray diffraction pattern, a ratio (I₀₀₂/I₁₀₁) of a peak intensity (I₀₀₂) of a (002) plane to a peak intensity (I₁₀₁) of a (101) plane of 0.5 or more.
